# EUROPÄISCHE PATENTSCHRIFT

(11) **EP 2 702 675 B1**
(45) Veröffentlichungstag und Bekanntmachung des Hinweises auf die Patenterteilung: **22.04.2020**
(21) Anmeldenummer: 12726715.1
(22) Anmeldetag: 26.04.2012
(51) Int. Cl.: H02M 3/156, H02M 1/42

(54) **VERFAHREN UND SCHALTUNG ZUR LEISTUNGSFAKTORKORREKTUR**
METHOD AND CIRCUIT FOR POWER FACTOR CORRECTION
PROCÉDÉ ET CIRCUIT DE CORRECTION DU FACTEUR DE PUISSANCE

(30) Priorität: 29.04.2011 DE 102011100010
(43) Veröffentlichungstag der Anmeldung: 05.03.2014
(73) Patentinhaber: Tridonic GmbH & Co. KG, 6851 Dornbirn (AT)
(72) Erfinder: MITTERBACHER, Andre, A-6850 Dornbirn (AT)
(74) Vertreter: Barth, Alexander
(86) Internationale Anmeldenummer: PCT/AT2012/000115
(87) Internationale Veröffentlichungsnummer: WO 2012/145770

(56) Entgegenhaltungen:
- WO-A1-99/63414
- DE-A1-102009 034 350
- US-A1- 2009 303 765
- ROSETTO L ET AL: "CONTROL TECHNIQUES FOR POWER FACTOR CORRECTION CONVERTERS", PROCEEDINGS OF PEMC 1994,, 1. Januar 1994 (1994-01-01), Seiten 1310-1318, XP007920948,

## Beschreibung

Die vorliegende Erfindung betrifft ein Verfahren und eine Schaltung zur Leistungsfaktorkorrektur. Insbesondere betrifft die Erfindung das technische Gebiet der Leistungsfaktorkorrektur für einen Wechselspannung/Gleichspannung-Wandler, wobei die Erfindung vorzugsweise für den Einsatz mit Betriebsgeräten bzw. elektronischen Vorschaltgeräten für Leuchtmittel geeignet ist.

Eine Leistungsfaktorkorrektur ("Power Factor Correction", PFC) wird eingesetzt, um Oberwellenströme in einem Eingangsstrom zu beseitigen bzw. zumindest zu verringern. Oberwellenströme können insbesondere bei nicht-linearen Verbrauchern, wie es beispielsweise Gleichrichter mit nachfolgender Glättung in Netzteilen sind, auftreten, da bei derartigen Verbrauchern der Eingangsstrom trotz der sinusförmigen Eingangsspannung in seiner Phase verschoben und nicht-sinusförmig verzerrt wird. Den dabei auftretenden höherfrequenten Oberschwingungen kann durch eine dem jeweiligen Gerät vorgeschaltete aktive oder getaktete Leistungsfaktorkorrektur-Schaltung entgegengewirkt werden, da die Leistungsfaktorkorrektur die nicht-lineare Stromaufnahme behebt und den Eingangsstrom so formt, dass er im Wesentlichen sinusförmig ist.

Auch Betriebsgeräte für Leuchtmittel sind nicht-linear, da sie eine Kombination aus einem Gleichrichter und einem nachgeschalteten Wechselrichter oder Gleichspannungswandler, mit dem das Leuchtmittel wie beispielsweise eine Leuchtdiode oder Gasentladungslampe betrieben wird, aufweisen. Zudem ist die Kennlinie des Leuchtmittels häufig nicht-linear, wobei dies beispielsweise für Gasentladungslampen, insbesondere für Leuchtstofflampen, gilt. Demzufolge werden auch bei derartigen elektronischen Vorschaltgeräten oder sonstigen Betriebsgeräten für Leuchtmittel häufig Leistungsfaktor-Korrekturschaltungen eingesetzt, wobei dies auch deshalb empfehlenswert ist, da durch Normen die zulässige Rücksendung von Oberwellen in das Versorgungsnetz geregelt ist.

Für Leistungsfaktor-Korrekturschaltungen wird häufig eine Schaltungstopologie zeichneten Boost-Konverter beruht. Dabei wird eine mit einer gleichgerichteten Wechselspannung versorgte Induktivität oder Spule durch Einschalten/Ausschalten eines steuerbaren Schalters mit einem Eingangsstrom geladen bzw. entladen wird. Der Entladestrom der Induktivität fließt über eine Diode zu dem mit einer Ausgangskapazität gekoppelten Ausgang des Konverters, so dass am Ausgang eine gegenüber der Eingangsspannung erhöhte Gleichspannung abgegriffen werden kann. Ebenso sind jedoch auch andere Konverterarten in Leistungsfaktorkorrektur-Schaltungen üblich, wie beispielsweise Flyback-Konverter oder Buck-Konverter.

Eine derartige Leistungsfaktor-Korrekturschaltung kann in verschiedenen Betriebsmodi betrieben werden, welche für einen Boost-Konverter beispielhaft in "Control Techniques For Power Factor Correction Converters", L. Rossetto, G. Spiazzi, P. Tenti, Proc. of PEMC 94, Warsaw, Poland, pp. 1310-1318, 1994 beschrieben sind. Insbesondere ist ein Betrieb mit einem kontinuierlichen Strom durch die zuvor erwähnte Induktivität (so genannter "Continuous Conduction Mode", CCM), ein Betrieb mit einem diskontinuierlichen Induktivitäts- oder Spulenstrom ("Discontinuous Conduction Mode", DCM) oder ein Betrieb im Grenzbereich zwischen kontinuierlichem und diskontinuierlichem Strom durch die Induktivität ("Borderline Conduction Mode" oder "Boundary Conduction Mode", BCM) bekannt.

So wird beispielsweise beim BCM-Betrieb jedes Abfallen des Spulenstroms auf Null während der Entladephase der Spule als Anlass dafür genommen, einen neuen Schaltzyklus zu starten und den Schalter wieder einzuschalten, um die Spule erneut zu laden. Im DCM-Betrieb wird hingegen nach dem Abfallen des Spulenstroms auf Null während der Entladephase zunächst eine vorgegeben zusätzliche Zeit abgewartet, bis der Schalter erneut geschlossen wird.

Die einzelnen Betriebsmodi besitzen unterschiedliche Vorteile, so dass bevorzugt abhängig von den Betriebsbedingungen der Leistungsfaktor-Korrekturschaltung während des Betriebs zwischen den jeweiligen Betriebsmodi gewechselt wird. Hinsichtlich der weiteren Details der einzelnen bekannten Betriebsmodi wird vollinhaltlich auf die oben genannte Veröffentlichung verwiesen.

Befindet sich die Leistungsfaktor-Korrekturschaltung in einem Betriebsmodus, in welchem die Information über einen Nulldurchgang des Spulenstroms dazu verwendet wird, einen neuen Lade- und Entladezyklus durch entsprechendes Ansteuern des Schalters zu starten, kann das Problem auftreten, dass möglicherweise aus bestimmten Gründen ein Nulldurchgang des Spulenstroms nicht erfasst werden kann. Ursachen hierfür können Überspannungszustände in oder an der Schaltung, Detektionsprobleme, Rauschen oder auch relativ kurze Ein- und Ausschaltzeiten des steuerbaren Schalters sein. Für diesen Fall ist in herkömmlichen Leistungsfaktor-Korrekturschaltungen vorgesehen, dass ein neuer Lade-/Entladezyklus durch entsprechendes Ansteuern des Schalters zumindest nach Ablauf einer bestimmten Zeitspanne gestartet wird, um somit auf jeden Fall nach Ablauf dieser auch als Neustartzeit bezeichneten Zeitspanne einen Neustart der Leistungsfaktor-Korrekturschaltung zu gewährleisten.

Die US 2009303765 A1 offenbart eine Leistungsfaktorkorrekturschaltung. Dort wird ein Hochsetzsteller-Schaltregler im sog. kontinuierlichen bzw. nichtlückenden Strombetrieb (auch CCM Mode genannt) betrieben. Die Steuerschaltung schaltet das Schaltmittel jeweils wieder ein, wenn der Strom durch den Shunt 12 einen vorgegebenen Wert unterschreitet.

Die DE 102009034350 A1 offenbart ebenfalls eine Leistungsfaktorkorrekturschaltung. Diese wird im kritischen Strombetrieb, d.h. dem Grenzbetrieb zwischen nichtlückenden und lückenden Strombetrieb, betrieben. In der D2 ist eine fix vorgegebene maximale Ausschaltzeit TOFF-MAX offenbart.

Wie zuvor beschrieben worden ist, wird bei einem DCM-Betrieb der Leistungsfaktor-Korrekturschaltung nach Erkennen eines Nulldurchgangs des Spulenstroms zunächst eine bestimmte Wartezeit abgewartet, ehe durch entsprechendes Ansteuern des Schalters ein neuer Lade-/Entladezyklus veranlasst wird. Dabei kann es abhängig von den Betriebsbedingungen zu einem Konflikt zwischen der für den normalen DCM-Betrieb obligatorische Wartezeit und der für den Fall der Nichterkennung eines Nulldurchgangs des Spulenstroms vorgesehenen Neustartzeit kommen.

Der vorliegenden Erfindung liegt daher die Aufgabe zugrunde, ein Verfahren und eine Schaltung zur Leistungskorrektur bereitzustellen, womit derartige Konflikte im Zusammenhang mit der für den zuvor beschriebenen Fehlerfall vorgesehenen Neustartzeit verhindert werden können.

Diese Aufgabe wird erfindungsgemäß durch eine Leistungsfaktor-Korrekturschaltung gemäß Anspruch 1 und ein Verfahren zur Leistungsfaktorkorrektur gemäß Anspruch 18 gelöst. Die abhängigen Ansprüche definieren vorteilhafte und bevorzugte Ausführungsformen der Erfindung.

Die erfindungsgemäße Leistungsfaktor-Korrekturschaltung umfasst eine mit einem Eingangsanschluss gekoppelte Induktivität und ein steuerbares Schaltmittel, wobei durch Schließen und Öffnen des Schaltmittels die Induktivität wahlweise geladen bzw. entladen wird. Der beim Entladen der Induktivität auftretende Entladestrom wird zu einem Ausgangsanschluss der Schaltung geleitet. Darüber hinaus ist eine Steuereinheit zum Ansteuern des Schaltmittels vorgesehen, wobei die Steuereinheit während eines Entladens der Induktivität ein Absinken des Entladestroms durch die Induktivität auf einen vorgegeben Strom-Grenzwert, insbesondere auf die Nulllinie, erfasst und davon abhängig das Schaltmittel zum Starten eines erneuten Lade- und Entladevorgangs ansteuert. Auch wenn kein Absinken des Entladestroms auf den vorgegebenen Strom-Grenzwert erkannt werden kann, wird das Schaltmittel zumindest oder spätestens nach Ablauf einer bestimmten Neustart-Zeitspanne zum Starten eines erneuten Lade- und Entladevorgangs ansteuert, wobei die Neustart-Zeitspanne variabel und von der Steuereinheit abhängig vom Betriebsmodus (auch Betriebszustand genannt) der Leistungsfaktor-Korrekturschaltung eingestellt oder ausgewählt wird.

Auf diese Weise kann die für den jeweils aktuellen Betriebsmodus geeignete Neustart-Zeitspannen derart gewählt werden, dass Konflikte der zuvor beschriebenen Art zuverlässig vermieden werden können.

Gemäß einem bevorzugten Ausführungsbeispiel der Erfindung kann das Schaltmittel der Leistungsfaktor-Korrekturschaltung mindestens gemäß einem ersten Betriebsmodus und einem zweiten Betriebsmodus zum Laden und Entladen der Induktivität angesteuert werden, wobei die Neustart-Zeitspanne abhängig von dem jeweils aktuellen Betriebsmodus gewählt wird. So kann beispielsweise bei einem Betrieb mit diskontinuierlichem Strom durch die Induktivität (DCM-Betrieb) eine längere Neustart-Zeitspanne als bei einem Betrieb im Grenzbereich zwischen kontinuierlichem und diskontinuierlichem Induktivitätsstrom (BCM-Betrieb) verwendet werden, wobei im DCM-Betrieb insbesondere die Neustart-Zeitspanne ausreichend lang gewählt wird, so dass sie mit der für diesen Betriebsmodus obligatorischen Wartezeit nicht kollidiert. Vorzugsweise ist dabei für den DCM-Betrieb die Neustart-Zeitspanne groß gegenüber der im DCM-Betrieb verwendeten Wartezeit. Grundsätzlich ist jedoch die Erfindung auch auf andere Betriebsmodi zum Ansteuern des Schaltmittels der Leistungsfaktor-Korrekturschaltung anwendbar.

Die Neustartzeit kann von der Steuereinheit ausgehend von dem letzten Öffnen des steuerbaren Schaltmittels, d.h. ausgehend von dem Beginn des letzten Entladevorgangs, mit Hilfe einer in die Steuereinheit integrierten Zeiterfassungseinrichtung berechnet oder erfasst werden, wobei jedoch auch andere zeitliche Referenzpunkte für die Bestimmung des Startpunkts der Neustartzeit möglich sind.

Gemäß weiterer Ausführungsbeispiele der vorliegenden Erfindung kann die Neustart-Zeitspanne auch variabel abhängig von anderen Parametern eingestellt werden, welche den jeweils aktuellen Betriebsmodus der Leistungsfaktor-Korrekturschaltung charakterisieren. Insbesondere kann die Neustart-Zeitspanne auch abhängig von der mit der Leistungsfaktor-Korrekturschaltung betriebenen Last bzw. der Ausgangsspannung und/oder abhängig von einem anliegenden Helligkeitssignal oder einem Helligkeitsniveau des Leuchtmittels und/oder abhängig von der Eingangsspannung der Leistungsfaktor-Korrekturschaltung gewählt werden.

Unabhängig von dem jeweiligen Parameter, welcher jeweils als Grundlage für die Einstellung der Neustart-Zeitspanne dient, ist es sowohl möglich, dass ein Nutzer den abhängig von dem Betriebsmodus jeweils gewünschten Wert für die Neustart-Zeitspanne einstellt, beispielsweise durch Auswahl eines Wert aus einer Vielzahl von vorgegebenen Werten, als auch dass die Steuereinheit im Betrieb automatisch abhängig von dem jeweils überwachten Parameter den jeweils passenden Wert einstellt, wobei im letztgenannten Fall die für unterschiedliche Werte des überwachten Parameters geeigneten Werte für die Neustart-Zeitspanne in einer Tabelle abgelegt sein können oder gemäß einer vorgegebenen Kennlinie bestimmt werden können.

Die erfindungsgemäße Schaltung kann insbesondere zur Leistungsfaktorkorrektur für einen Wechselspannung/Gleichspannung-Wandler dienen, so dass es sich in diesem Fall bei der Eingangsspannung um eine gleichgerichtete Wechselspannung und bei der Ausgangsspannung um eine Gleichspannung handelt. Darüber hinaus ist die erfindungsgemäß Leistungsfaktor-Korrekturschaltung vorzugsweise gemäß der Topologie eines Boost-Konverters aufgebaut, so dass der Entladestrom der Induktivität über eine Diode dem mit einer Ausgangskapazität gekoppelten Ausgangsanschluss zugeführt wird. Selbstverständlich ist die Erfindung jedoch auch auf andere Konverter-Topologien anwendbar, welche in einer Leistungsfaktor-Korrekturschaltung Anwendung finden können.

Die erfindungsgemäße Steuereinheit ist vorzugsweise in Form einer integrierten Schaltung, insbesondere einer ASIC-Schaltung, ausgestaltet und weist lediglich einen gemeinsamen Messeingang zum Erfassen einer der Ausgangsspannung entsprechenden Messgröße und einer dem Strom durch die Induktivität bzw. einem Nulldurchgang dieses Stroms entsprechenden Messgröße auf, wobei darüber hinaus ein Ausgang der Steuereinheit zum Ausgeben des Steuersignals an das vorzugsweise in Form eines FET-Schalters ausgestalteten Schaltmittel vorhanden ist, so dass die Steuereinheit mit lediglich zwei Pins konzipiert werden kann.

Ohne darauf beschränkt zu sein, ist die erfindungsgemäße Leistungsfaktor-Korrekturschaltung insbesondere zum Betrieb mit einem Betriebsgerät für ein Leuchtmittel oder zum Betrieb mit einem elektronischen Vorschaltgerät für ein Leuchtmittel ausgestaltet ist, wobei es sich bei dem Leuchtmittel um eine Entladungslampe, eine Leuchtstofflampe oder eine Leuchtdiode oder dergleichen handeln kann. Bei diesem Anwendungsfall ermöglicht die zuvor beschriebene Erfindung, dass der Betrieb der Leistungsfaktor-Korrekturschaltung durch variable Wahl der Neustart-Zeitspanne auf einfache Art und Weise an unterschiedlich ausgestaltete Betriebsgeräte oder Vorschaltgeräte bzw. unterschiedliche Lasten angepasst werden kann.

Die vorliegende Erfindung wird nachfolgend unter Bezugnahme auf die Zeichnungen anhand bevorzugter Ausführungsformen erläutert.
Fig. 1 zeigt eine Leistungsfaktor-Korrekturschaltung gemäß einem Ausführungsbeispiel der Erfindung,
Fig. 2A und Fig. 2B zeigen Darstellungen zur Erläuterung eines "Boundary Conduction Mode"-Betriebs (BCM) der Leistungsfaktor-Korrekturschaltung im Normalfall und in einem Fehlerfall, und
Fig. 3A und 3B zeigen Darstellungen zur Erläuterung eines "Discontinuous Conduction Mode"-Betriebs (DCM) der Leistungsfaktor-Korrekturschaltung im Normalfall und in einem Fehlerfall.

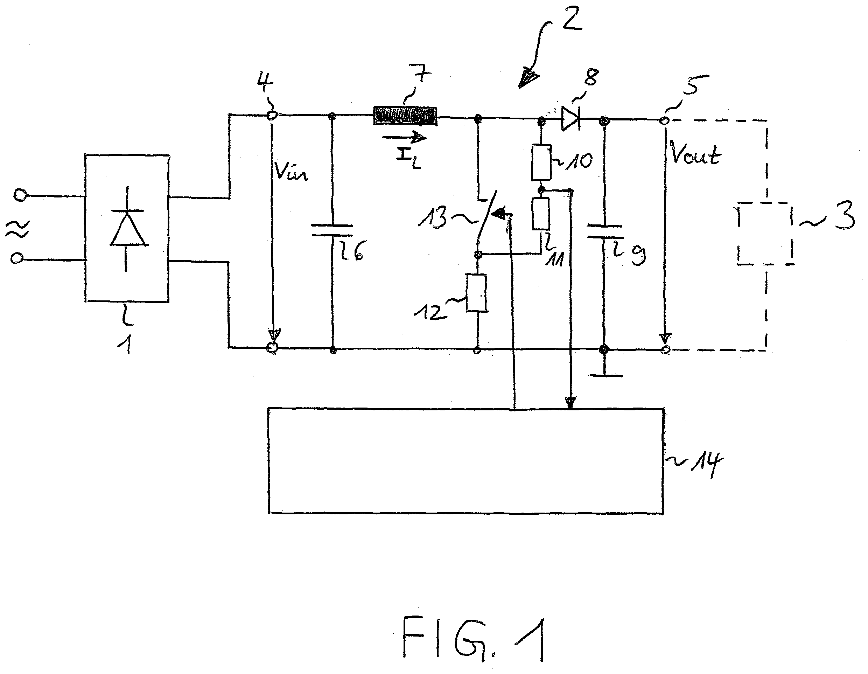

In Fig. 1 ist eine Leistungsfaktor-Korrekturschaltung 2 für einen Wechselspannung/Gleichspannung-Wandler gemäß einem bevorzugten Ausführungsbeispiel der vorliegenden Erfindung dargestellt.

Dabei wird in Fig. 1 davon ausgegangen, dass eine Versorgungs-Wechselspannung, beispielsweise die Netzspannung, von einem Gleichrichter 1 in eine gleichgerichtete Wechselspannung umgesetzt wird, welche somit als Eingangs-Wechselspannung Vin zwischen einem Eingangsanschluss 4 der Leistungsfaktor-Korrekturschaltung 2 und Masse anliegt. Die Eingangs-Wechselspannung Vin wird von einem Glättungskondensator 6 gefiltert und einer Induktivität oder Spule 7 zugeführt. Die Induktivität 7 ist mit einer Diode 8 zwischen dem Eingangsanschluss 4 und einem Ausgangsanschluss der Leistungsfaktor-Korrekturschaltung in Serie geschaltet. An dem mit einem Ausgangs-Gleichspannungskondensator 9 gekoppelten Ausgangsanschluss 5 wird eine Ausgangs-Gleichspannung Vout bereitgestellt.

Die Ausgangs-Gleichspannung Vout dient zur Versorgung einer Last 3, welcher die Leistungsfaktor-Korrekturschaltung 2 vorgeschaltet ist. Bei der Last kann es sich beispielsweise um ein Betriebsgerät oder ein elektronisches Vorschaltgerät für ein Leuchtmittel wie beispielsweise eine Leuchtstofflampe, eine HalogenLampe, eine Leuchtdiodenanordnung etc. handeln.

An die Verbindung zwischen der Induktivität 7 und der Diode 8 ist ein steuerbarer elektronischer Schalter 13, welcher beispielsweise in Form eines Feldeffekttransistors realisiert sein kann, angeschlossen, wobei der Schalter 13 bei der dargestellten Ausführungsform über einen Shunt-Widerstand 12 mit Masse verbunden ist. Parallel zu dem Schalter 13 ist eine Serienschaltung aus zwei Widerständen 10, 11 angeschlossen, welche mit einem Verbindungspunkt zwischen dem Schalter 13 und dem Shunt-Widerstand 12 verbunden ist. Die Widerstände 10, 11 weisen gegenüber dem Shunt-Widerstand 12 vorzugsweise deutlich größere Widerstandswerte auf.

Im eingeschalteten Zustand des Schalters 13 ist die Induktivität 7 über den Schalter 13 und den Shunt-Widerstand 12 mit Masse verbunden, wobei die Diode 8 sperrt, so dass die Induktivität 7 aufgeladen und Energie in der Induktivität gespeichert wird. Ist hingegen der Schalter 13 ausgeschaltet, d.h. offen, ist die Diode 8 leitend, so dass sich die Induktivität 7 über die Diode 8 in den Ausgangskondensator 9 entladen kann und die in der Induktivität 7 gespeicherte Energie in den Ausgangskondensator 9 übertragen wird.

Der Schalter 13 wird von einer Steuereinheit 14 angesteuert, welche vorzugsweise in Form einer integrierten Schaltung, insbesondere in Form eines ASIC, ausgestaltet ist. Die Leistungsfaktorkorrektur wird durch wiederholtes Ein- und Ausschalten des Schalters 13 mit einer deutlich höheren Frequenz als die Frequenz der gleichgerichteten Eingangs-Wechselspannung Vin erzielt. Die Frequenz der Einschalt- und Ausschaltvorgänge des Schalters 13 und somit der Lade- und Entladezyklen der Induktivität 7 kann typischerweise im Bereich mehrerer 10kHz liegen.

Bei der in Fig. 1 dargestellten Ausführungsform der Leistungsfaktor-Korrekturschaltung 2, welche auf der Topologie eines Boost-Konverters beruht (so dass die Ausgangsspannung Vout größer als die Eingangsspannung Vin ist), erfolgt das gezielte Ein- und Ausschalten des Schalters 13 und die Bestimmung der entsprechenden Einschaltdauer abhängig von der Ausgangsspannung Vout und insbesondere abhängig von dem Nulldurchgang des durch die Induktivität 7 fließenden Stroms I_{L}. In bestimmten Betriebsmodi, insbesondere im so genannten "Continuous Conduction Mode" mit einem kontinuierlichen Strom durch die Induktivität 7, kann jedoch auch ein Schalten abhängig von dem Erreichen anderer Strom-Grenzwerte erfolgen.

Bei der in Fig. 1 gezeigten Ausführungsform kann sowohl die Ausgangsspannung Vout als auch der Strom I_{L} durch die Induktivität 7 mit Hilfe lediglich einer Messschaltung überwacht werden, welche die bereits zuvor erwähnten Widerstände 10 und 11 umfasst, wobei ein Eingang der Steuereinheit 14 mit einem Messpunkt zwischen den beiden Widerständen 10, 11 verbunden ist.

Während des Einschaltens des Schalters 13 steigt der Strom I_{L} durch die Induktivität 7 linear an, wobei der Strom I_{L} über den Schalter 13 und den Shunt-Widerstand 12 nach Masse fließt, so dass der Spannungsabfall am Shunt-Widerstand 12 ein Maß für den Ladestrom und damit für den durch den Schalter 13 fließenden Strom ist. Da in der Ladephase der eingeschaltete Schalter 13 die Serienschaltung aus den Widerständen 10 und 11 kurzschließt, ist somit die an dem Eingang der Steuereinheit 14 anliegende Spannung ein Maß für den durch den Schalter 13 fließenden Strom I_{L}.

Wird der Schalter 13 ausgeschaltet, sinkt der Strom I_{L} durch die Induktivität 7 wieder linear ab und fließt über die Diode 8 zu der Last 3. Die Diode 8 ist während der Entladephase leitend, wobei sich die Ausgangsspannung Vout von der über die Widerstände 10-12 abfallenden Spannung geringfügig um den Spannungsabfall an der Diode 8 unterscheidet. Dieser Spannungsunterschied zwischen der Ausgangsspannung Vout und der am Verbindungspunkt zwischen der Induktivität 7 und dem Schalter 13 anliegenden Spannung wird erst dann signifikant, wenn sich der Entladestrom I_{L} der Nulllinie nähert bzw. diese kreuzt. Bei diesem auch als "Zero Crossing Detection" (ZCD) bezeichneten Ereignis zeigt die am Verbindungspunkt zwischen der Induktivität 7 und dem Schalter 13 anliegende Spannung einen nach unten gerichteten Spannungsknick, während die Ausgangsspannung nahezu unverändert bleibt. Die während der Entladephase am Eingang der Steuereinheit 14 anliegende Spannung ist ein Maß für die über die Serienschaltung der Widerstände 10-12 abfallende Spannung. Von der Steuereinheit kann somit während des größten Teils der Entladephase durch Überwachung dieser Spannung die Ausgangsspannung Vout und am Ende der Entladephase ein ZCD-Ereignis bzgl. des Stroms I_{L} detektiert werden.

Die Steuereinheit 14 kann mit der Information über den Istwert der Ausgangsspannung Vout die nächste Einschaltdauer für den Schalter 13 bestimmen, wobei dies beispielsweise auf Grundlage eines Vergleichs der gemessenen Ausgangsspannung Vout mit einer festen Referenzspannung erfolgen kann. Abhängig von diesem Vergleichsergebnis wird die Einschaltdauer des Schalters 13 von der Steuereinheit 14 im Sinne einer Regelung entsprechend angepasst, um die gewünschte Ausgangsspannung zu erhalten.

Das Auftreten eines ZCD-Ereignisses im Verlauf des Stroms I_{L} wird hingegen genutzt, um den nächsten Einschaltzeitpunk für den Schalter 13 zu bestimmen. Dies kann abhängig von dem jeweiligen Betriebsmodus der Leistungsfaktor-Korrekturschaltung auf unterschiedliche Art und Weise erfolgen.

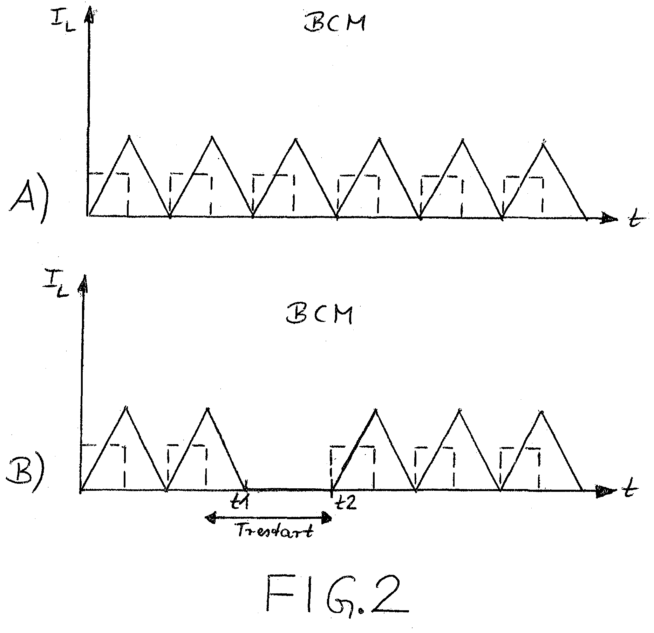

Fig. 2A zeigt beispielhaft den Verlauf des Stroms I_{L} für den Fall eines Betriebs im Grenzbereich zwischen kontinuierlichem und diskontinuierlichem Strom ("Boundary Conduction Mode", BCM). Bei diesem Steuerkonzept wird der Schalter 13 mit einer insbesondere abhängig von dem Istwert der Ausgangsspannung Vout ermittelten Einschaltdauer eingeschaltet, wobei das Einschalten des Schalters 13 immer dann erfolgt, wenn der Strom I_{L} durch die Induktivität 7 wieder auf Null abgesunken ist, so dass sich der in Fig. 2A gezeigte Stromverlauf ergibt. Der Zustand des Schalters 13 ist in Fig. 2A gestrichelt dargestellt. Der Konverter wird somit gleichsam im Grenzbereich zwischen einem Betrieb mit kontinuierlichem Strom und einem Betrieb mit diskontinuierlichem Strom betrieben.

In Fig. 2B ist der Verlauf des Stroms I_{L} im BCM-Betriebsmodus für den Fall dargestellt, dass aus einem beliebigen Grund der für einen neuen Lade-/Entladezyklus erforderliche Nulldurchgang des Stroms I_{L} nicht erfasst werden kann. Wie in Fig. 2B dargestellt ist, verlaufen die beiden ersten Lade-/Entladezyklen normal. Zum Zeitpunkt t1 ist der Strom I_{L} erneut auf Null abgefallen, wobei jedoch beispielsweise aufgrund von Rauscheinflüssen oder Detektionsproblemen dieser Nulldurchgang nicht von der Steuereinheit 14 erfasst werden kann. Die Steuereinheit 14 erwartet zwar das Erreichen der Nulllinie, es wird jedoch von der zuvor beschriebenen Messeinrichtung mit den Widerständen 10-12 keine entsprechende Bestätigung geliefert. Um dennoch einen fortlaufenden Betrieb der Leistungsfaktor-Korrekturschaltung zu ermögliche, ist für diesen Fall vorgesehen, dass die Steuereinheit 14 spätestens nach Ablauf einer Zeitspanne Trestart einen Neustart veranlasst und den Schalter 13 zur Durchführung eines neuen Lade- und Entladevorgangs ansteuert. Bei dem in Fig. 2A gezeigten Ausführungsbeispiel wird von der Steuereinheit 14 bzw. von einer darin integrierten Zeitmesseinrichtung die Neustart-Zeitspanne Trestart von dem Zeitpunkt des letztmaligen Öffnens des Schalters 13, welcher der Steuereinheit 14 bekannt ist, gemessen. Demzufolge wird gemäß Fig. 2B der Schalter 13 wieder zum Zeitpunkt t2 geschlossen, obwohl der letzte Nulldurchgang des Stroms I_{L} nicht erfasst werden konnte.

Die in Fig. 2A angedeutete Neustart-Zeitspanne Trestart ist variabel und wird von der Steuereinheit 14 abhängig von dem jeweiligen Betriebsmodus der Leistungsfaktor-Korrekturschaltung derart gewählt bzw. eingestellt, dass sie den Betriebsbedingungen bestmöglich gerecht wird.

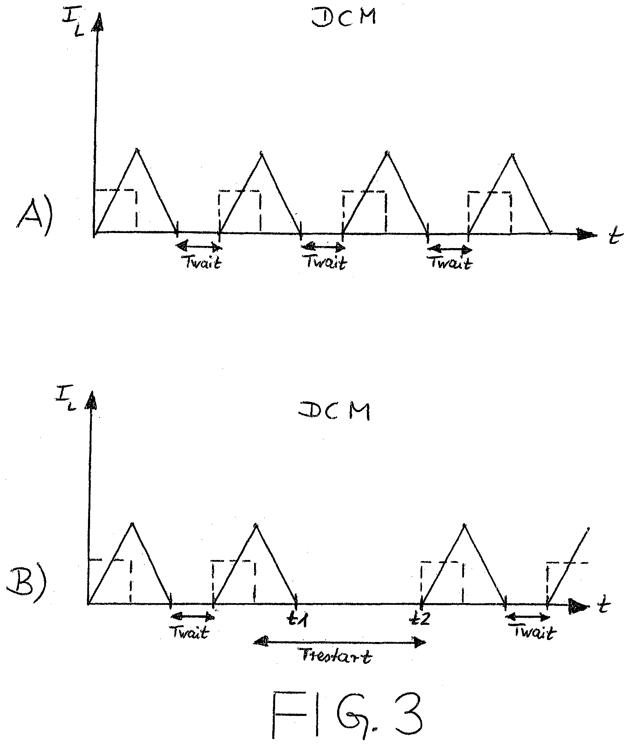

So wird gemäß der Erfindung die Neustart-Zeitspanne Trestart abhängig von dem jeweiligen Betriebsmodus der Leistungsfaktor-Korrekturschaltung gewählt. Dies soll nachfolgend näher anhand von Fig. 3 erläutert werden.

Fig. 3A zeigt beispielhaft den Verlauf des Stroms I_{L} für einen Betrieb der Leistungsfaktor-Korrekturschaltung 2 mit einem diskontinuierlichen Stromverlauf ("Discontinuous Conduction Mode", DCM). Ähnlich wie zu dem BCM-Betrieb von Fig. 2 steigt auch in diesem Fall der Strom bei Einschalten des Schalters 13 linear an, wobei jedoch bei Absinken des Stroms auf die Nulllinie nach Ausschalten des Schalters 13 nicht sofort ein neuer Schaltzyklus gestartet wird, sondern bis zum erneuten Einschalten des Schalters 13 wird eine zusätzliche Wartezeit Twait gewartet. Erst nach Ablauf dieser Wartezeit Twait wird der Schalter 13 wieder eingeschaltet, um die Induktivität 7 erneut aufzuladen. Somit ergibt sich der in Fig. 3A gezeigte diskontinuierliche Stromverlauf. Auch in Fig. 3A ist der Zustand des Schalters 13 gestrichelt angedeutet.

In Fig. 3B ist der Verlauf des Stroms I_{L} im DCM-Betriebsmodus für den Fall dargestellt, dass der für einen neuen Lade-/Entladezyklus auslösende Nulldurchgang des Stroms I_{L} nicht erfasst werden kann. Wie in Fig. 3B dargestellt ist, verlaufen die beiden ersten Lade-/Entladezyklen wieder normal. Zum Zeitpunkt t1 ist der Strom I_{L} erneut auf Null abgefallen, wobei dieser Nulldurchgang nicht von der Steuereinheit 14 erfasst werden kann. Um dennoch einen fortlaufenden Betrieb der Leistungsfaktor-Korrekturschaltung im DCM-Betriebsmodus zu ermöglichen, ist für diesen Fall vorgesehen, dass die Steuereinheit 14 spätestens nach Ablauf einer Zeitspanne Trestart nach dem letztmaligen Öffnen des Schalters 13 einen Neustart veranlasst und den Schalter 13 zur Durchführung eines neuen Lade- und Entladevorgangs ansteuert. Demzufolge wird gemäß Fig. 3B der Schalter 13 wieder zum Zeitpunkt t2 geschlossen, obwohl der letzte Nulldurchgang des Stroms I_{L} nicht erfasst werden konnte.

Wie aus einem Vergleich der Darstellungen von Fig. 2B und Fig. 3B ersichtlich ist, sind die für den BCM-Betrieb und den DCM-Betrieb gewählten Neustartzeiten unterschiedlich. Insbesondere wird im DCM-Betrieb eine gegenüber dem BCM-Betrieb längere Neustartzeit Trestart gewählt, um mögliche Kollisionen mit der im DCM-Betrieb vorgesehenen Wartezeit Twait und daraus resultierende Betriebsprobleme zu vermeiden. Dabei wird die Neustartzeit Trestart im DCM-Betrieb insbesondere derart eingestellt, dass sie gegenüber der Wartezeit Twait vergleichsweise lang ist.

Von der Steuereinheit 14 wird somit die Neustart-Zeitspanne Trestart variabel und adaptiv abhängig von den jeweils vorhandenen Betriebsbedingungen gewählt.

Zusätzlich oder alternativ zu dem zuvor beschriebenen Ausführungsbeispiel, bei dem die Neustart-Zeitspanne Trestart abhängig von dem jeweiligen Betriebsmodus der Leistungsfaktor-Korrekturschaltung angepasst wird, ist es auch möglich, die Neustart-Zeitspanne abhängig von anderen Parametern, welche den jeweils aktuellen Betriebsmodus der Leistungsfaktor-Korrekturschaltung repräsentieren, anzupassen. So kann beispielsweise auch vorgesehen sein, dass die Neustart-Zeitspanne Trestart an die jeweils vorhandenen Lastbedingungen, an die Ausgangsspannung Vout oder an die Eingangsspannung Vin etc. angepasst wird. Im letztgenannten Fall ist zur Erfassung der aktuellen Eingangsspannung Vin nicht unbedingt eine separate Messanordnung erforderlich, sondern die Eingangsspannung Vin kann beispielsweise auch auf Grundlage der Ausgangsspannung Vout (welche bei der in Fig. 1 gezeigten Schaltung ohnehin überwacht wird), der Einschaltdauer des Schalters 13 und der Zeitdauer, welche nach dem Öffnen des Schalters 13 vergeht bis der Strom I_{L} die Nulllinie erreicht hat, berechnet werden.

Die Anpassung der Neustart-Zeitspanne Trestart an den jeweils vorhandenen Betriebsmodus erfolgt vorzugsweise automatisch durch die Steuereinheit 14 laufend während des Betriebs der Leistungsfaktor-Korrekturschaltung 2. Ebenso ist jedoch auch möglich, dass die jeweils gewünschte Neustart-Zeitspanne Trestart manuell von einem Nutzer variabel eingestellt und beispielsweise aus mehreren vorgegebenen Werten ausgewählt wird.

## Patentansprüche

1. Leistungsfaktor-Korrekturschaltung (2), umfassend
- einen Eingangsanschluss (4) zum Empfangen einer Eingangsspannung (Vin),
- eine mit dem Eingangsanschluss (4) gekoppelte Induktivität (7),
- ein mit der Induktivität (7) gekoppeltes steuerbares Schaltmittel (13), um durch Schließen und Öffnen des Schaltmittels (13) die Induktivität (7) wahlweise zu laden und zu entladen,
- einen Ausgangsanschluss (5) zum Ausgeben einer Ausgangsspannung (Vout), und
- eine Steuereinheit (14) zum Ansteuern des Schaltmittels (13),
wobei die Steuereinheit (14) derart ausgestaltet ist, dass sie während eines Entladens der Induktivität (7) ein Absinken eines Stroms (I_{L}) durch die Induktivität (7) auf einen vorgegeben Strom-Grenzwert erfasst und davon abhängig das Schaltmittel (13) zum Starten eines erneuten Lade- und Entladevorgangs ansteuert, und
wobei die Steuereinheit (14) derart ausgestaltet ist, dass sie auch für den Fall, dass sie kein Absinken des Stroms (I_{L}) durch die Induktivität (7) auf den Strom-Grenzwert erfasst, das Schaltmittel (13) zumindest nach Ablauf einer bestimmten Neustart-Zeitspanne (Trestart) zum Starten eines erneuten Lade- und Entladevorgangs ansteuert,
**dadurch gekennzeichnet,**
**dass** die Steuereinheit (14) derart ausgestaltet ist, dass sie die Neustart-Zeitspanne (Trestart) variabel und abhängig von einem Betriebsmodus der Leistungsfaktor-Korrekturschaltung (2) einstellt.

2. Leistungsfaktor-Korrekturschaltung (2) nach Anspruch 1,
**dadurch gekennzeichnet,**
**dass** das Schaltmittel (13) von der Steuereinheit (14) mindestens gemäß einem ersten Betriebsmodus und einem zweiten Betriebsmodus zum Laden und Entladen der Induktivität (7) ansteuerbar ist, und
**dass** die Neustart-Zeitspanne (Trestart) an den jeweils aktuellen Betriebsmodus anpassbar ist.

3. Leistungsfaktor-Korrekturschaltung (2) nach Anspruch 2,
**dadurch gekennzeichnet,**
**dass** die Steuereinheit (14) derart ausgestaltet ist, dass sie im ersten Betriebsmodus das Schaltmittel (13) für die Dauer einer bestimmten Einschaltzeit einschaltet, anschließend das Schaltmittel (13) ausschaltet und das Schaltmittel (13) erst wieder einschaltet, wenn beim Entladen der Induktivität (7) der Strom (I_{L}) durch die Induktivität (7) auf den Strom-Grenzwert abgesunken ist.

4. Leistungsfaktor-Korrekturschaltung (2) nach Anspruch 2 oder Anspruch 3,
**dadurch gekennzeichnet,**
**dass** die Steuereinheit (14) derart ausgestaltet ist, dass sie im zweiten Betriebsmodus das Schaltmittel (13) für die Dauer einer bestimmten Einschaltzeit einschaltet, anschließend das Schaltmittel (13) ausschaltet und das Schaltmittel (13) erst wieder nach Ablauf einer Wartezeit (Twait) bei Feststellen eines Absinkens des Stroms (I_{L}) durch die Induktivität (7) auf den Strom-Grenzwert beim Entladen der Induktivität (7) einschaltet.

5. Leistungsfaktor-Korrekturschaltung nach Anspruch 4,
**dadurch gekennzeichnet,**
**dass** die Steuereinheit (14) für den zweiten Betriebsmodus eine Neustart-Zeitspanne (Trestart) einstellt, welche größer als die Wartezeit (Twait) ist.

6. Leistungsfaktor-Korrekturschaltung (2) nach einem der Ansprüche 2-5,
**dadurch gekennzeichnet,**
**dass** der erste Betriebsmodus ein Betriebsmodus mit einem Strom (I_{L}) durch die Induktivität (7) im Grenzbereich zwischen einem kontinuierlichen und einem diskontinuierlichen Strom ist.

7. Leistungsfaktor-Korrekturschaltung (2) nach einem der Ansprüche 2-6,
**dadurch gekennzeichnet,**
**dass** der zweite Betriebsmodus ein Betriebsmodus mit einem diskontinuierlichen Strom (I_{L}) durch die Induktivität (7) ist.

8. Leistungsfaktor-Korrekturschaltung (2) nach einem der Ansprüche 2-7,
**dadurch gekennzeichnet,**
**dass** die Steuereinheit (14) derart ausgestaltet ist, dass sie für den ersten Betriebsmodus eine kürzere Neustart-Zeitspanne (Trestart) als für den zweiten Betriebsmodus einstellt.

9. Leistungsfaktor-Korrekturschaltung (2) nach einem der vorhergehenden Ansprüche.
**dadurch gekennzeichnet,**
**dass** der Strom-Grenzwert Null ist.

10. Leistungsfaktor-Korrekturschaltung (2) nach einem der vorhergehenden Ansprüche,
**dadurch gekennzeichnet,**
**dass** die Steuereinheit (14) derart ausgestaltet ist, dass sie die Neustart-Zeitspanne (Trestart) variabel abhängig von einer mit dem Ausgangsanschluss gekoppelten Last (3) einstellt.

11. Leistungsfaktor-Korrekturschaltung (2) nach einem der vorhergehenden Ansprüche,
**dadurch gekennzeichnet,**
**dass** die Steuereinheit (14) derart ausgestaltet ist, dass sie die Neustart-Zeitspanne (Trestart) variabel abhängig von der Eingangsspannung (Vin) einstellt.

12. Leistungsfaktor-Korrekturschaltung (2) nach einem der vorhergehenden Ansprüche,
**dadurch gekennzeichnet,**
**dass** das steuerbare Schaltmittel (13) über eine Diode (8) mit dem Ausgangsanschluss (5) gekoppelt ist, so dass beim Entladen der Induktivität (7) der Strom (I_{L}) durch die Induktivität (7) über die Diode (8) dem Ausgangsanschluss (5) zugeführt wird.

13. Leistungsfaktor-Korrekturschaltung (2) nach einem der vorhergehenden Ansprüche,
**dadurch gekennzeichnet,**
**dass** mit der Steuereinheit (14) gekoppelte Erfassungsmittel (10-12) zum Erfassen einer einen Nulldurchgang des Stroms (I_{L}) durch die Induktivität (7) entsprechende Messgröße vorgesehen sind.

14. Leistungsfaktor-Korrekturschaltung nach Anspruch 13,
**dadurch gekennzeichnet,**
**dass** die Erfassungsmittel (10-12) zudem zum Erfassen einer der Ausgangsspannung (Vout) entsprechenden Messgröße ausgestaltet sind,
wobei die Steuereinheit (14) derart ausgestaltet ist, dass sie abhängig von der erfassten Ausgangsspannung (Vout) eine Einschaltzeit für das Schaltmittel (13) ermittelt.

15. Leistungsfaktor-Korrekturschaltung (2) nach einem der vorhergehenden Ansprüche,
**dadurch gekennzeichnet,**
**dass** die Steuereinheit (14) derart ausgestaltet ist, dass sie automatisch die Neustart-Zeitspanne (Trestart) an den Betriebsmodus der Leistungsfaktor-Korrekturschaltung (2) anpasst.

16. Leistungsfaktor-Korrekturschaltung (2) nach einem der vorhergehenden Ansprüche,
**dadurch gekennzeichnet,**
**dass** die Leistungsfaktor-Korrekturschaltung (2) zum Betrieb mit einem Betriebsgerät (3) für ein Leuchtmittel oder zum Betrieb mit einem elektronischen Vorschaltgerät (3) für ein Leuchtmittel ausgestaltet ist.

17. Betriebsgerät (3) für ein Leuchtmittel mit einer Leistungsfaktor-Korrekturschaltung (2) nach einem der vorhergehenden Ansprüche.

18. Verfahren zur Leistungsfaktorkorrektur für einen Wechselspannung/Gleichspannung-Wandler (1, 2), umfassend die Schritte
- Anlegen einer Eingangsspannung (Vin) an eine Induktivität (7),
- wahlweise Laden und Entladen der Induktivität (7) durch Schließen und Öffnen eines mit der Induktivität (7) gekoppelten Schaltmittels (13) mittels einer Steuereinheit (14), und
- Erfassen eines Absinkens eines Stroms (I_{L}) durch die Induktivität (7) auf einen vorgegeben Strom-Grenzwert während eines Entladens der Induktivität (7) mittels der Steuereinheit (14), um davon abhängig das Schaltmittel (13) zum Starten eines erneuten Lade- und Entladevorgangs anzusteuern, wobei auch für den Fall, dass kein Absinken des Stroms (I_{L}) durch die Induktivität (7) auf den Strom-Grenzwert erfasst wird, das Schaltmittel (13) zumindest nach Ablauf einer bestimmten Neustart-Zeitspanne (Trestart) zum Starten eines erneuten Lade- und Entladevorgangs angesteuert wird,
**dadurch gekennzeichnet,**
**dass** die Steuereinheit (14) die Neustart-Zeitspanne (Trestart) variabel und abhängig von einem Betriebsmodus der Leistungsfaktor-Korrekturschaltung (2) einstellt.

19. Verfahren nach Anspruch 18,
**dadurch gekennzeichnet,**
**dass** das Verfahren mit einer Leistungsfaktor-Korrekturschaltung (2) nach einem der Ansprüche 1-16 durchgeführt wird.

## Claims

1. A power factor correction circuit (2), comprising
- an input connection (4) for receiving an input voltage (Vᵢₙ),
- an inductor (7) coupled with the input connection (4),
- a controllable switch element (13) coupled with the inductor (7), in order to optionally charge and to discharge the inductor (7) by closing and opening the switch element (13),
- an output connection (5) for the output of an output voltage (Vₒᵤₜ), and
- a control unit (14) for controlling the switch element (13),
wherein the control unit (14) is designed in such a manner that during a discharging of the inductor (7) it detects a decrease in a current (I_{L}) through the inductor (7) to a predetermined current limit value and dependent thereon it activates the switch element (13) to start a new charging and discharging process, and
wherein the control unit (14) is designed in such a manner that in the event that it detects no decrease in the current (I_{L}) through the inductor (7) to the current limit value, it activates the switch element (13) at least after expiration of a certain restart time interval (Trestart) to start a new charging and discharging process,
**characterized in**
**that** the control unit (14) is designed in such a manner that it sets the restart time interval (Trestart) variably and depending on an operating mode of the power factor correction circuit (2).

2. The power factor correction circuit (2) according to Claim 1,
**characterized in**
**that** the switch element (13) can be activated by the control unit (14) at least according to a first operating mode and a second operating mode to charge and discharge the inductor (7), and
**that** the restart time interval (Trestart) can be adapted to the in each case current operating mode.

3. The power factor correction circuit (2) according to Claim 2,
**characterized in**
**that** the control unit (14) is designed in such a manner that in the first operating mode it switches on the switch element (13) for a duration of a certain switch-on time, then switches off the switch element (13) and only switches the switch element (13) back on, if the current (I_{L}) through the inductor (7) has decreased to the current limit value when discharging the inductor (7).

4. The power factor correction circuit (2) according to Claim 2 or 3,
**characterized in**
**that** the control unit (14) is designed in such a manner that in the second operating mode it switches on the switch element (13) for the duration of a certain switch-on time, then switches off the switch element (13) and only switches the switch element (13) back on after expiration of a wait time (Twait) when a decrease in the current (I_{L}) through the inductor (7) to the current limit value has been detected when discharging the inductor (7).

5. The power factor correction circuit according to Claim 4,
**characterized in**
**that** the control unit (14) for the second operating mode sets a restart time interval (Trestart), which is greater than the wait time (Twait).

6. The power factor correction circuit (2) according to any one of Claims 2-5,
**characterized in**
**that** the first operating mode is an operating mode with a current (I_{L}) through the inductor (7) in the boundary region between a continuous and a discontinuous current.

7. The power factor correction circuit (2) according to any one of Claims 2-6,
**characterized in**
**that** the second operating mode is an operating mode with a discontinuous current (I_{L}) through the inductor (7).

8. The power factor correction circuit (2) according to any one of Claims 2-7,
**characterized in**
**that** the control unit (14) is designed in such a manner that it sets a shorter restart time interval (Trestart) for the first operating mode than for the second operating mode.

9. The power factor correction circuit (2) according to any one of the preceding claims,
**characterized in**
**that** the current limit value is zero.

10. The power factor correction circuit (2) according to any one of the preceding claims,
**characterized in**
**that** the control unit (14) is designed in such a manner that it sets the restart time interval (Trestart) variably depending on a load (3) coupled with the output connection.

11. The power factor correction circuit (2) according to any one of the preceding claims,
**characterized in**
**that** the control unit (14) is designed in such a manner that it sets the restart time interval (Trestart) variably depending on the input voltage (Vᵢₙ).

12. The power factor correction circuit (2) according to any one of the preceding claims,
**characterized in**
**that** the controllable switch element (13) is coupled via a diode (8) with the output connection (5), so that when discharging the inductor (7) the current (I_{L}) through the inductor (7) is fed via the diode (8) to the output connection (5).

13. The power factor correction circuit (2) according to any one of the preceding claims,
**characterized in**
**that** detection means (10-12) coupled with the control unit (14) are provided for detecting a measured variable corresponding to a zero-crossing of the current (I_{L}) through the inductor (7).

14. The power factor correction circuit according to Claim 13,
**characterized in**
**that** the detection means (10-12) are also designed for detecting a measured variable corresponding to the output voltage (Vₒᵤₜ),
wherein the control unit (14) is designed in such a manner that depending on the detected output voltage (Vₒᵤₜ) it determines a switch-on time for the switch element (13).

15. The power factor correction circuit (2) according to any one of the preceding claims,
**characterized in**
**that** the control unit (14) is designed in such a manner that it automatically adapts the restart time interval (Trestart) to the operating mode of the power factor correction circuit (2).

16. The power factor correction circuit (2) according to any one of the preceding claims,
**characterized in**
**that** the power factor correction circuit (2) is designed for operating with an operating device (3) for a lighting means or for operating with an electronic ballast (3) for a lighting means.

17. An operating device (3) for a lighting means with a power factor correction circuit (2) according to any one of the preceding claims.

18. A method for the power factor correction for an alternating current voltage/direct current voltage converter (1, 2), comprising the steps
- application of an input voltage (Vin) to an inductor (7),
- optional charging and discharging of the inductor (7) by closing and opening a switch element (13) coupled with the inductor (7) by means of a control unit (14), and
- detection of a decrease in a current (I_{L}) through the inductor (7) to a predetermined current limit value during a discharging of the inductor (7) by means of the control unit (14), in order to activate, depending thereon, the switch element (13) to start a new charging and discharging process, wherein even in the event that no decrease in the current (I_{L}) through the inductor (7) to the current limit value is detected, at least after expiration of a certain restart time interval (Trestart) the switch element (13) is activated to start a new charging and discharging process,
**characterized in**
**that** the control unit (14) sets the restart time interval (Trestart) variably and depending on an operating mode of the power factor correction circuit (2).

19. The method according to Claim 18,
**characterized in**
**that** the method is carried out with a power factor correction circuit (2) according to any one of Claims 1-16.

## Revendications

1. Circuit de correction de facteur de puissance (2) comprenant
- une borne d'entrée (4) pour la réception d'une tension d'entrée (Vin),
- une inductance (7) couplée avec la borne d'entrée (4),
- un moyen de commutation (13) contrôlable couplé avec l'inductance (7), afin de charger ou de décharger l'inductance (7) par fermeture et ouverture du moyen de commutation (13),
- une borne de sortie (5) pour la production d'une tension de sortie (Vout) et
- une unité de commande (14) pour le contrôle du moyen de commutation (13),
l'unité de commande (14) étant conçue de façon à détecter, pendant une décharge de l'inductance (7), une diminution d'un courant (I_{L}) à travers l'inductance (7) jusqu'à une valeur limite de courant et qui contrôle, en fonction de cela, le moyen de commutation (13) pour le démarrage d'un nouveau processus de charge et de décharge et
l'unité de commande (14) étant conçue de façon à ce que dans le cas où elle ne détecte aucune diminution du courant (I_{L}) à travers l'inductance (7) jusqu'à la valeur limite de courant, elle contrôle le moyen de commutation (13) au moins après l'écoulement d'un laps de temps de redémarrage (Trestart) pour le démarrage d'un nouveau processus de charge te décharge,
**caractérisé en ce que**
l'unité de commande (14) est conçue de façon à régler le laps de temps de redémarrage (Trestart) de manière variable et en fonction d'un mode de fonctionnement du circuit de correction de facteur de puissance (2).

2. Circuit de correction de facteur de puissance (2) selon la revendication 1,
**caractérisé en ce que**
le moyen de commutation (13) peut être contrôlé par l'unité de commande (14) au moins selon un premier mode de fonctionnement et un deuxième mode de fonctionnement pour la charge et la décharge de l'inductance (7) et
le laps de temps de redémarrage (Trestart) peut être adapté au mode de fonctionnement actuel respectif.

3. Circuit de correction de facteur de puissance (2) selon la revendication 2,
**caractérisé en ce que**
l'unité de commande (14) est conçue de façon à ce que, dans le premier mode de fonctionnement, elle active le moyen de commutation (13) pour la durée d'un temps d'activation déterminé, puis elle désactive le moyen de commutation (13) et n'active à nouveau le moyen de commutation (13) que lorsque, lors de la décharge de l'inductance (7), le courant (I_{L}) à travers l'inductance (7) a diminué jusqu'à la valeur limite de courant.

4. Circuit de correction de facteur de puissance (2) selon la revendication 2 ou la revendication 3,
**caractérisé en ce que**
l'unité de commande (14) est conçue de façon à ce que, dans le deuxième mode de fonctionnement, elle active le moyen de commutation (13) pour la durée d'un temps d'activation déterminé, puis elle désactive le moyen de commutation (13) et n'active à nouveau le moyen de commutation (13) qu'après l'écoulement d'un temps d'attente (Twait) lors de la constatation d'une diminution du courant (I_{L}) à travers l'inductance (7) jusqu'à la valeur limite de courant lors de la décharge de l'inductance (7).

5. Circuit de correction de facteur de puissance selon la revendication 4,
**caractérisé en ce que**
l'unité de commande (14) règle, pour le deuxième mode de fonctionnement, un laps de temps de redémarrage (Trestart) qui est supérieure au temps d'attente (Twait).

6. Circuit de correction de facteur de puissance (2) selon l'une des revendications 2 à 5,
**caractérisé en ce que**
le premier mode de fonctionnement est un mode de fonctionnement avec un courant (I_{L}) à travers l'inductance (7) dans la zone limite entre un courant continu et un courant discontinu.

7. Circuit de correction de facteur de puissance (2) selon l'une des revendications 2 à 6,
**caractérisé en ce que**
le deuxième mode de fonctionnement est un mode de fonctionnement avec un courant discontinu (I_{L}) à travers l'inductance (7).

8. Circuit de correction de facteur de puissance (2) selon l'une des revendications 2 à 7,
**caractérisé en ce que**
l'unité de commande (14) est conçue de façon à régler, pour le premier mode de fonctionnement, un laps de temps de redémarrage (Trestart) plus court que pour le deuxième mode de fonctionnement.

9. Circuit de correction de facteur de puissance (2) selon l'une des revendications précédentes,
**caractérisé en ce que**
la valeur limite du courant est égale à zéro.

10. Circuit de correction de facteur de puissance (2) selon l'une des revendications précédentes,
**caractérisé en ce que**
l'unité de commande (14) est conçue de façon à régler le laps de temps de redémarrage (Trestart) de manière variable en fonction d'une charge (3) couplée à la borne de sortie.

11. Circuit de correction de facteur de puissance (2) selon l'une des revendications précédentes,
**caractérisé en ce que**
l'unité de commande (14) est conçue de façon à régler le laps de temps de redémarrage (Trestart) de manière variable en fonction de la tension d'entrée (Vin).

12. Circuit de correction de facteur de puissance (2) selon l'une des revendications précédentes,
**caractérisé en ce que**
le moyen de commutation contrôlable (13) est couplé, par l'intermédiaire d'une diode (8), avec la borne de sortie (5), de façon à ce que, lors de la décharge de l'inductance (7), le courant (I_{L}) à travers l'inductance (7) soit appliqué à la borne de sortie (5) par l'intermédiaire de la diode (8).

13. Circuit de correction de facteur de puissance (2) selon l'une des revendications précédentes,
**caractérisé en ce que**
des moyens de mesure (10 - 12) couplés avec l'unité de commande (14) sont prévus pour la mesure d'une grandeur de mesure correspondant à un passage à zéro du courant (I_{L}) à travers l'inductance (7).

14. Circuit de correction de facteur de puissance (2) selon la revendication 13,
**caractérisé en ce que**
les moyens de mesure (10 - 12) sont en outre conçus pour la mesure d'une grandeur de mesure correspondant à la tension de sortie (Vout),
l'unité de commande (14) étant conçue de façon à déterminer, en fonction de la tension de sortie (Vout) mesurée, un temps d'activation pour le moyen de commutation (13).

15. Circuit de correction de facteur de puissance (2) selon l'une des revendications précédentes,
**caractérisé en ce que**
l'unité de commande (14) est conçue de façon à adapter automatiquement le laps de temps de redémarrage (Trestart) au mode de fonctionnement du circuit de correction de facteur de puissance (2).

16. Circuit de correction de facteur de puissance (2) selon l'une des revendications précédentes,
**caractérisé en ce que**
le circuit de correction de facteur de puissance (2) est conçu pour fonctionner avec un appareil de commande (3) pour un moyen d'éclairage ou pour fonctionner avec un ballast électronique (3) pour un moyen d'éclairage.

17. Appareil de commande (3) pour un moyen d'éclairage avec un circuit de correction de facteur de puissance (2) selon l'une des revendications précédentes.

18. Procédé de correction de facteur de puissance pour un convertisseur tension alternative/tension continue (1, 2) comprenant les étapes suivantes
- application d'une tension d'entrée (Vin) à une inductance (7),
- sélectivement charge et décharge de l'inductance (7) par fermeture et ouverture d'un moyen de commutation (13) couplé avec l'inductance (7) au moyen d'une unité de commande (14) et
- détection d'une diminution d'un courant (I_{L}) ,à travers l'inductance (7) jusqu'à une valeur limite de courant prédéterminée pendant une décharge de l'inductance (7) au moyen de l'unité de commande (14), afin de contrôler, en fonction de cela, le moyen de commutation (13) pour le démarrage d'un nouveau processus de charge et de décharge, moyennant quoi, même dans le cas où aucune diminution du courant (I_{L}) à travers l'inductance (7) jusqu'à la valeur limite du courant n'est détectée, le moyen de commutation (13) est contrôlé, après l'écoulement d'un laps de temps de redémarrage (Trestart) déterminé, pour le démarrage d'un nouveau processus de charge et décharge, **caractérisé en ce que**
l'unité de commande (14) règle le laps de temps de redémarrage (Treastart) de manière variable et en fonction d'un mode de fonctionnement du circuit de correction de facteur de puissance (2).

19. Procédé selon la revendication 18,
**caractérisé en ce que**
le procédé est exécuté avec un circuit de correction de facteur de puissance (2) selon l'une des revendications 1 à 16.
